# EUROPÄISCHE PATENTSCHRIFT

(11) **EP 0 338 466 B1**
(45) Veröffentlichungstag und Bekanntmachung des Hinweises auf die Patenterteilung: **09.06.1993**
(21) Anmeldenummer: 89106790.2
(22) Anmeldetag: 15.04.1989
(51) Int. Cl.: B60M 5/00, H01R 4/64

(54) **Gleisanschlussbolzen**
Connection bolt for rails
Boulon de raccord pour rails

(30) Priorität: 20.04.1988 DE 8805213 U
(43) Veröffentlichungstag der Anmeldung: 25.10.1989
(73) Patentinhaber: Pütz, Siegfried, 56244 Ötzingen (DE)
(72) Erfinder: Pütz, Siegfried, 56244 Ötzingen (DE)
(74) Vertreter: Stenger, Watzke & Ring Patentanwälte

(56) Entgegenhaltungen:
- DE-A- 1 916 895
- DE-A- 3 438 947
- DE-U- 6 828 574
- US-A- 4 102 497

## Beschreibung

Die Erfindung betrifft eine Vorrichtung zum elektrischen Verbinden eines Anschlußkabels mit einer Schiene, die mit einer konischen Bohrung versehen ist, mittels eines in die Bohrung eingesetzten konischen Bolzens, der an seiner einen Stirnseite mit einem Gewindeansatz für eine Befestigungsmutter und an seiner anderen Stirnseite mit einem Bolzenkopf mit einer darin ausgebildeten Bohrung versehen ist, in die das abisolierte Kabelende des Anschlußkabels eingeführt und mit dem Bolzenkopf elektrisch verbunden ist, wobei das abisolierte Kabelende des Anschlußkabels mit dem Bolzenkopf unmittelbar oder mittelbar verschweißt oder verlötet ist.

Ein derartiger Gleisanschlußbolzen ist aus dem DE-GM 86 28 574 bekannt und dient bei elektrisch betriebenen Strombahnen der Stromrückführung des Fahrstromes und/oder der Übertragung von Gleisfreimeldesignalen bei Zugsicherungsanlagen. Zu diesem Zweck muß der Übergangswiderstand zwischen der Schiene und dem Anschlußkabel durch den Gleisanschlußbolzen so gering wie möglich und darüber hinaus für die gesamte Betriebsdauer unveränderlich sein, da bereits geringe Widerstandsänderungen die Gleisfreimeldesignale verfälschen können, was dann zu einer Funktionsuntüchtigkeit der Zugsicherungsanlage führt. Der bekannte Gleisanschlußbolzen sieht daher zur Schaffung genau defierter Übergänge und Verbindungen einen konischen Bolzen vor, der eine gasdichte Verbindung mit der Schiene und darüber hinaus eine große Auflagefläche gewährleistet, wobei die Schiene mit einer korrespondierenden konischen Durchbrechung versehen ist, in die der konische Bolzen eingesetzt ist. Die Sicherung des Gleisanschlußbolzens an der Schiene erfolgt mittels einer Verschraubung, wobei zu diesem Zweck der konsiche Bolzen an seiner einen Stirnseite mit einem Gewindeansatz versehen ist. Die in der Schiene ausgebildete Bohrung ist dabei in einer neutralen Zone ausgebildet und stellt dadurch, daß die konische Bohrung dem konischen Bolzen genau entspricht und die konische Bohrung somit vollständig ausgefüllt ist, keine Bruchgefahr für die Schiene dar.

Zur eigentlichen Befestigung des abisolierten Kabelendes des Anschlußkabels am Gleisanschlußbolzen dient ein Bolzenkopf, der an der anderen Stirnseite des konischen Bolzens zur Schaffung einer Sollbruchstelle angelötet ist. In diesem Bolzenkopf ist eine durchgehende Bohrung ausgebildet, die der Aufnahme des abisolierten Kabelendes des Anschlußkabels dient. Zu diesem Zweck ist dieses abisolierte Kabelende des Anschlußkabels von einer Metallhülse umgeben, wobei die elektrische und mechanische Verbindung zwischen dem Außenumfang des abisolierten Kabelendes des Anschlußkabels und der Innenwand der Metallhülse durch Hartlötung mit einem Silberlot erfolgt. Diese Metallhülse wird mit dem abisolierten Kabelende des Anschlußkabels in die Bohrung im Bolzenkopf eingeführt, wobei die elektrische und mechanische Verbindung zwischen der Mantelfläche der Metallhülse und der Innenwand der Bohrung des Bolzenkopfes durch Verlöten hergestellt ist. Um das Eindringen von Feuchtigkeit in die Zwischenfugen zu verhindern, ist im Übergangsbereich zwischen der Isolierung des Anschlußkabels und dem vorstehend Bereich der Metallhülse eine Tülle aus Kunststoff oder Gummi aufgesteckt.

Bei diesem Gleisanschlußbolzen kann Feuchtigkeit in die Zwischenfugen eindringen, die zwischen dem abisolierten Kabelende des Anschlußkabels und der Metallhülse einerseits und zwischen der Metallhülse und dem Bolzenkopf andererseits ausgebildet sind, insbesondere wenn die Kunststoff- oder Gummitülle im Laufe der Zeit durch Verwitterung brüchig wird und daher ihre Schutzfunktion nicht mehr erfüllt und Feuchtigkeit hindurchläßt. Die Folge davon ist, daß die Zwischenfugen korrodieren, was eine Erhöhung des elektrischen Übergangswiderstandes zwischen den entsprechenden metallischen Teilen zur Folge hat. Genau dies aber führt zu veränderten Gleisfreimeldesignalen.

Davon ausgehend liegt der Erfindung daher die **Aufgabe** zugrunde, einen verbesserten Gleisanschlußbolzen zu schaffen, bei dem die Gefahr der Korrosion durch eindringende Feuchtigkeit vermindert ist.

Als technische **Lösung** wird mit der Erfindung vorgeschlagen, daß die Verschweißung oder Verlötung im Kantenbereich, bei dem das abisolierte Kabelende durch die Bohrungseintrittsöffnung aus dem Bolzenkopf heraustritt, ringförmig ausgebildet ist.

Ein nach dieser technischen Lehre ausgebildeter Gleisanschlußbolzen hat den Vorteil, daß durch die ringförmige Verschweißung oder Hartverlötung ein Eindringen von Feuchtigkeit und damit eine Korrosion in den Zwischenfugen im Bolzenkopf ausgeschlossen ist. Dadurch ist gewährleistet, daß auch nach langer Betriebszeit der Übergangswiderstand von dem Gleisanschlußbolzen zu dem Anschlußkabel konstant niedrig ist, so daß für eine gute Stromrückführung des Fahrstromes sowie vor allem für eine problemlose Übertragung der Gleisfreimeldesignale für die Zugsicherungsanlagen gesichert ist. Durch den Einsatz entsprechender Materialien für den Gleisanschlußbolzen bracht darüber hinaus keine Oberflächenbeschichtung gegen Korrosion vorgenommen werden.

Ausgehend von einem Gleisanschlußbolzen, bei dem das abisolierte Kabelende des Anschlußkabels von einer in diese eingeführte Metallhülse umgeben und mit dieser elektrisch verbunden ist, wobei diese Metallhülse zusammen mit dem abisolierten Kabelende des Anschlußkabels in die im Bolzenkopf ausgebildete Bohrung eingeführt ist und dabei einführseitig aus der Bohrungseintrittsöffnung vorsteht, wird in einer Weiterbildung der Erfindung vorgeschlagen, daß die Verschweißung oder Verlötung zwischen dem Bolzenkopf und der Metallhülse erfolgt. Dadurch ist eine "mittelbare" Verschweißung oder Verlötung zwischen dem Bolzenkopf und dem abisolierten Ende des Anschlußkabels geschaffen, wobei auf zuverlässige Weise verhindert wird, daß Feuchtigkeit in die zwischen der Metallhülse und dem Bolzenkopf ausgebildete Zwischenfuge eindringen kann.

Ausgehend von einem Gleisanschlußbolzen, bei dem die Bohrung vollständig durch den Bolzenkopf hindurchgeht und dabei die Stirnseite des abisolierten Kabelendes des Anschlußkabels sowie gegebenenfalls der Metallhülse im wesentlichen bündig mit der Außenseite des Bolzenkopfes abschließt, wird in einer Weiterbildung der Erfindung vorgeschlagen, daß in stirnseitigen Übergangsbereich zwischen der Außenseite des Bolzenkopfes und der Stirnseite des abisolierten Kabelendes des Anschlußkabels gegebenenfalls zusammen mit der dazwischen angeordneten Stirnseite der Metallhülse die Teile ringförmig miteinander verschweißt oder verlötet sind. Bei dieser Ausführungsform des Bolzenkopfes mit einer durchgehenden Bohrung ist somit gewährleistet, daß sowohl einsteckseitig als auch auf der anderen Seite eine einwandfreie Abdichtung durch beidseitiges Verschweißen und Verlöten geschaffen ist, so daß die Zwischenfugen beidseitig abgedichtet sind. In einer Weiterbildung können die Teile dabei derart stirnseitig miteinander verschweißt oder verlötet sein, daß sie durch das Schweiß- und Lötmittel kreisscheibenförmig abgedeckt und elektrisch miteinander verbunden sind. Die Teile sind somit stirnseitig nicht mehr als reiner Ring miteinander verschweißt, sondern die gesamte stirnseitige Öffnung der Bohrung ist durch eine Schweiß- oder Lötmittelscheibe abdichtend abgedeckt.

In einer alternativen Ausführungsform kann die Bohrung auch als Sacklochbohrung ausgebildet sein, wobei dann die stirnseitige Abdichtung durch den Boden der Sacklochbohrung gebildet ist, indem das vordere Ende des abisolierten Kabelendes des Anschlußkabels sowie der Metallhülse vom Bolzenkopf umgeben ist. Es ist daher lediglich erforderlich, im Austrittsbereich des abisolierten Kabelendes sowie gegebenenfalls der Metallhülse eine entsprechende ringförmige Verschweißung oder Verlötung vorzunehmen.

Um eine feuchtigkeitsdichte, sowohl elektrische als auch mechanische Verbindung zwischen dem abisolierten Kabelende des Anschlußkabels und der dieses umgebenden Metallhülse zu schaffen, ist in einer ersten Ausführungsform der aus der Bohrungseintrittsöffnung einführseitig vorstehende Bereich der Metallhülse mit dem abisolierten Kabelende des Anschlußkabels verpreßt.

Alternativ oder aber auch zusätzlich kann in einer zweiten Ausführungsform der aus der Bohrungseintrittsöffnung einführseitig vorstehende Bereich der Metallhülse und die Isolierung des Anschlußkabels von einem Schrumpfschlauch dichtend umgeben sein. Dadurch wird im Übergangsbereich ein Eindringen von Feuchtigkeit verhindert.

Statt der Verwendung einer zusätzlichen Metallhülse kann der Bolzenkopf zusammen mit dem angeschweißten oder angelöteten, abisolierten Kabelende des Anschlußkabels mit einer Kunststoffmasse umgossen sein. Durch dieses Umgießen und anschliessendes Aushärten mit einer Kunststoffmasse wird in gleicher Weise ein Eindringen von Feuchtigkeit in die Zwischenfuge zwischen dem abisolierten Kabelende des Anschlußkabels und dem Bolzenkopf verhindert.

In einer Weiterentwicklung ist im Übergangsbereich zwischen dem Gewindeansatz und dem konischen Bolzen eine eine Sollbruchstelle definierende Querschnittsschwächung vorgesehen.

Alternativ hierzu kann im Übergangsbereich zwischen dem Gewindeansatz und dem konischen Bolzen der Gewindeansatz einen auf einen geringeren Querschnitt abgesenkten Ansatz aufweisen, der in eine dazu korrespondierende Ausnehmung im konischen Bolzen eingreift und mit diesem durch eine ein Hartlot aufweisende, eine Sollbruchstelle definierende Lötfuge verbunden ist.

Verschiedene Ausführungsbeispiele eines erfindungsgemäßen Gleisanschlußbolzens werden nachfolgend anhand der Zeichnungen beschrieben. In diesen zeigt:
- Fig. 1: einen schematischen Querschnitt durch eine Schiene mit einem daran befestigten Gleisanschlußbolzen;
- Fig. 2: einen Schnitt durch eine erste Ausführungsform eines Gleisanschlußbolzens;
- Fig. 3: eine Stirnansicht auf den Gleisanschlußbolzen in Fig. 2 in Achsrichtung des Anschlußkabels (in Fig. 2 von oben);
- Fig. 4: eine zweite Ausführungsform eines Gleisanschlußbolzens in einer der Fig. 2 entsprechenden Darstellung;
- Fig. 5: eine dritte Ausführungsform eines Gleisanschlußbolzens mit schrägverlaufender Bohrung im Bolzenkopf;
- Fig. 6: eine Stirnansicht des Gleisanschlußbolzens in Fig. 5;
- Fig. 7: eine vierte Ausführungsform eines Gleisanschlußbolzens für zwei Anschlußkabel;
- Fig. 8: einen Schnitt entlang der Linie VIII-VIII in Fig. 7.

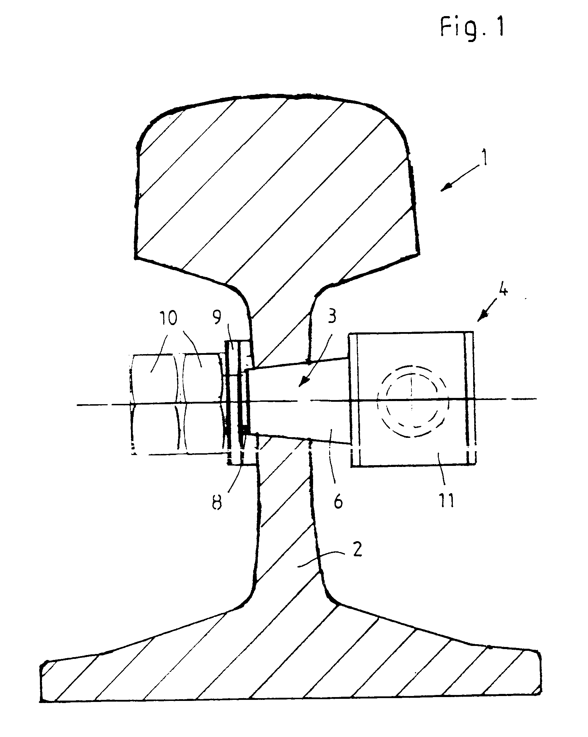

In Fig. 1 ist das Querschnittsprofil einer Schiene 1 erkennbar, in deren Steg 2 eine konusförmige Bohrung 3 ausgebildet ist, die der Befestigung eines Gleisanschlußbolzens 4 dient. Dieser stellt die elektrische sowie mechanische Verbindung eines Anschlußkabels 5 mit der Schiene 1 her, wie es für die Stromrückführung des Fahrstromes sowie für Gleisfreimeldesignale für Zugsicherungsanlagen benötigt wird.

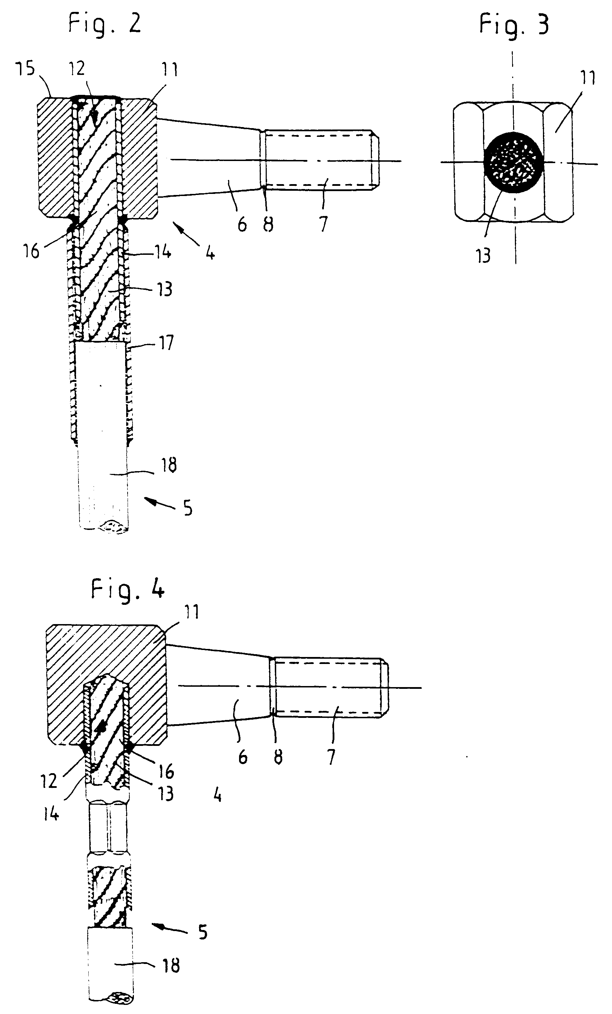

Während in Fig. 1 der Gleisanschlußbolzen 4 rein schematisch angedeutet ist, sind in den Fig. 2 bis 8 vier verschiedene Ausführungsformen dargestellt. Jeder dieser Gleisanschlußbolzen 4 besteht aus einem konischen Bolzen 6, der mit der konischen Bohrung 3 im Steg 2 der Schiene 1 korrespondiert. An der einen Stirnseite dieses konischen Bolzens 6 ist einstückig ein Gewindeansatz 7 angeordnet, wobei im Übergangsbereich zwischen dem konischen Bolzen 6 und dem Gewindeansatz 7 eine ringförmige Querschnittsschwächung 8 vorgesehen ist, die als Sollbruchstelle dient. Wie in Fig. 1 erkennbar ist, wird nämlich der Gleisanschlußbolzen 4 mit seinem konischen Bolzen 6 in die ebenfalls konische Bohrung 3 hindurchgesteckt und nach Aufstecken einer Unterlegscheibe 9 durch Aufschrauben einer gekonterten Befestigungsmutter 10 endgültig befestigt. Auf der anderen Stirnseite des konischen Bolzens 6 ist dieser mit einem Bolzenkopf 11 versehen, wobei sich diese Bolzenköpfe 11 in den verschiedenen Ausführungsformen voneinander unterscheiden.

Bei der in Fig. 2 dargestellten Ausführungsform ist der Bolzenkopf 11 einstückig mit dem Bolzen 6 ausgebildet und besteht aus Stahl, Edelstahl oder einem sonstigen Metall. In dem dargestellten Ausführungsbeispiel ist der Bolzenkopf 11 aus einem Sechskant gefertigt. Die Fertigung aus einem Vierkant oder einem Rundmaterial ist gleichfalls denkbar.

Im Bolzenkopf 11 ist eine durchgehende, querverlaufende Bohrung 12 ausgebildet. In diese wird das abisolierte Kabelende 13 des Anschlußkabels 5 hineingesteckt, nachdem zuvor auf das abisolierte Kabelende 13 des Anschlußkabels 5 eine Metallhülse 14, die beispielsweise aus Kupfer bestehen kann, aufgesteckt worden ist. Wie in Fig. 2 erkennbar ist, schließt die Stirnseite des abisolierten Kabelendes 13 sowie die Stirnseite der Metallhülse 14 mit der Außenseite 15 des Bolzenkopfes 11 bündig ab, während im Bereich der Bohrungseintrittsöffnung 16 die Metallhülse 14 vorsteht.

Ebenso wie bei den anderen Gleisanschlußbolzen 4 sind bei dem in Fig. 2 dargestellten Gleisanschlußbolzen 4 die zwischen dem abisolierten Kabelende 13, der Metallhülse 14 und dem Bolzenkopf 11 ausgebildeten Zwischenfugen abgedichtet, um ein Eindringen von Feuchtigkeit und damit eine Korrosion zu verhindern. Zu diesem Zweck ist im Bereich der Bohrungseintrittsöffnung 16 der Bolzenkopf 11 mit der Metallhülse 14 ringförmig verscheißt oder mit Hartlot verlötet, so daß die dort beginnende Zwischenfuge abgedichtet und darüber hinaus die elektrische Verbindung zwischen dem Bolzenkopf 11 und der Metallhülse 14 geschaffen ist. Im Bereich des stirnseitigen Endes des abisolierten Kabelendes 13 des Anschlußkabels 5 ist ebenfalls eine ringförmige Verschweißung oder Verlötung vorgesehen, wobei das ringförmig aufgetragene Schweiß- oder Lötmittel die dort beginnenden Zwischenfugen zwischen dem Bolzenkopf 11, der Metallhülse 14 und dem abisolierten Kabelende 13 des Anschlußkabels 5 dichtend abdeckt, wie insbesondere auch in Fig. 3 erkennbar ist. Statt dessen ist es auch denkbar, die gesamte stirnseitige Bohrungsöffnung kreisscheibenförmig mit Schweiß- oder Lötmittel abzudecken, um so einerseits eine Abdichtung und andererseits die elektrische Verbindung zwischen dem Bolzenkopf 11, der Metallhülse 14 und dem abisolierten Kabelende 13 des Anschlußkabels 5 herzustellen. Weiterhin weist dieser Gleisanschlußbolzen 4 noch einen Schrumpfschlauch 17 auf, der dichtend auf den vorstehenden Bereich der Metallhülse 14 sowie der Isolierung 18 des Anschlußkabels 5 aufgezogen ist, so daß ein Eindringen von Feuchtigkeit in die Zwischenfuge zwischen der Metallhülse 14 und dem abisolierten Kabelende 13 des Anschlußkabels 5 verhindert wird.

Neben einer einwandfreien und dauerhaften Abdichtung bleibt die Flexibilität des Anschlußkabels 5 bis in die Mitte des Bolzenkopfes 11 voll erhalten, so daß Schwingungen der Schiene 1 unschädlich sind und zu keinem Bruch des Anschlußkabels 5 führen. Die aufgebrachten Schweiß- oder Lötmittel verlaufen dabei höchstens bis zur Mitte des Bolzenkopfes 11.

Die in Fig. 4 dargestellte Ausführungsform eines Gleisanschlußbolzens 4 unterscheidet sich von der zuvor beschriebenen Ausführungsform dadurch, daß die Bohrung 12 als Sacklochbohrung ausgebildet ist, die sich im Bodenbereich kegelförmig verjüngt. Dabei ist wiederum im Bereich der Bohrungseintrittsöffnung der Bolzenkopf 11 mit der Metallhülse 14 ringförmig verschweißt oder verlötet. Um ein Eindringen von Feuchtigkeit in die Zwischenfuge zwischen der Metallhülse 14 und dem abisolierten Kabelende 13 des Anschlußkabels 5 zu verhindern, ist der vorstehende Bereich der Metallhülse 14 mit dem abisolierten Kabelende 13 des Anschlußkabels 5 verpreßt, so daß auf einen Schrumpfschlauch 17 verzichtet werden kann. Nichtsdestoweniger ist es aber auch bei dieser Ausführungsform des Gleisanschlußbolzens 4 möglich, zusätzlich noch einen Schrumpfschlauch 17 vorzusehen. Genausogut ist es denkbar, bei dem in Fig. 2 dargestellten Gleisanschlußbolzen 4 zusätzlich zum Schrumpfschlauch 17 oder statt dessen eine Verpressung vorzusehen, wie sie in Fig. 4 dargestellt ist. Es sind somit sämtliche Mischformen in den verschiedenen Ausführungsformen des Gleisanschlußbolzens 4 denkbar.

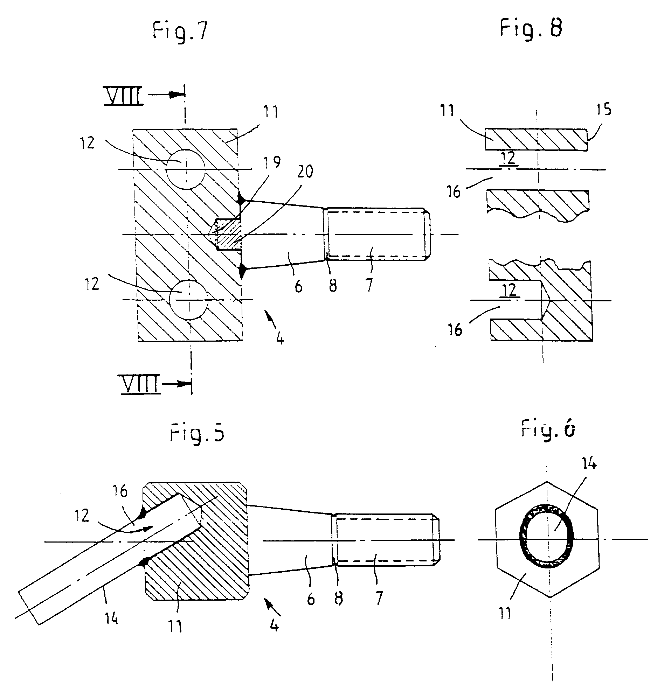

In den Fig. 5 und 6 ist eine dritte Ausführungsform eines Gleisanschlußbolzens 4 dargestellt, bei dem die Bohrung 12 ebenfalls in Form einer Sacklochbohrung schräg ausgebildet ist. Entsprechend oval ist die stirnseitige Verschweißung oder Verlötung, wie in Fig. 6 erkennbar ist.

Die in den Fig. 7 und 8 dargestellte vierte Ausführungsform eines Gleisanschlußbolzens 4 unterscheidet sich von den vorhergehenden Ausführungsformen dadurch, daß zwei Anschlußkabel 5 kontaktiert werden können, wobei diese unterschiedliche Querschnitte aufweisen können. Ein weiterer Unterschied besteht darin, daß der Bolzenkopf 11 mit dem konischen Bolzen 6 (und dem Gewindeansatz 7) nicht einstückig ausgebildet ist. Statt dessen ist im Bolzenkopf 11 eine Ausnehmung 19 vorgesehen, in die ein an der Stirnseite des konischen Bolzens 6 ausgebildeter, einstückiger Ansatz 20 eingreift, wobei sowohl die mechanische als auch die elektrische Verbindung zwischen dem Bolzen 6 und dem Bolzenkopf 11 durch eine ringförmige Verlötung oder Verschweißung erfolgt, wie in Fig. 7 erkennbar ist. Fig. 8 läßt weiterhin erkennen, daß die obere Bohrung 12 als durchgehende Bohrung und die untere Bohrung 12 als Sacklochbohrung ausgebildet ist. Auch hier sind die unterschiedlichsten Variationen denkbar.

In einer nicht dargestellten Ausführungsform kann das abisolierte Kabelende 13 des Anschlußkabels 5 ohne die Verwendung einer Metallhülse 14 direkt und unmittelbar mit dem Bolzenkopf 11 im Sinne der Fig. 2 und 4 verschweißt sein. Das so geschaffene Gebilde ist dann mit einer Kunststoffmasse umgossen.

### Bezugszeichenliste

- 1: Schiene
- 2: Steg
- 3: Bohrung
- 4: Gleisanschlußbolzen
- 5: Anschlußkabel
- 6: Bolzen
- 7: Gewindeansatz
- 8: Querschnittsschwächung
- 9: Unterlegscheibe
- 10: Befestigungsmutter
- 11: Bolzenkopf
- 12: Bohrung
- 13: abisoliertes Kabelende
- 14: Metallhülse
- 15: Außenseite
- 16: Bohrungseintrittsöffnung
- 17: Schrumpfschlauch
- 18: Isolierung
- 19: Ausnehmung
- 20: Ansatz

## Patentansprüche

1. Vorrichtung zum elektrischen Verbinden eines Anschlußkabels (5) mit einer Schiene (1), die mit einer konischen Bohrung (3) versehen ist, mittels eines in die Bohrung eingesetzten konischen Bolzens (6), der an seiner einen Stirnseite mit einem Gewindeansatz (7) für eine Befestigungsmutter (10) und an seiner anderen Stirnseite mit einem Bolzenkopf (11) mit einer darin ausgebildeten Bohrung (12) versehen ist, in die das abisolierte Kabelende (13) des Anschlußkabels (5) eingeführt und mit dem Bolzenkopf (11) elektrisch verbunden ist, wobei das abisolierte Kabelende (13) des Anschlußkabels (5) mit dem Bolzenkopf (11) unmittelbar oder mittelbar verschweißt oder verlötet ist,
**dadurch gekennzeichnet,**
daß die Verschweißung oder Verlötung im Kantenbereich, bei dem das abisolierte Kabelende (13) durch die Bohrungseintrittsöffnung (16) aus dem Bolzenkopf (11) heraustritt, ringförmig ausgebildet ist.

2. Vorrichtung nach Anspruch 1, wobei das abisolierte Kabelende (13) des Anschlußkabels (5) von einer in diese eingeführte Metallhülse (14) umgeben und mit dieser elektrisch verbunden ist, wobei diese Metallhülse (14) zusammen mit dem abisolierten Kabelende (13) des Anschlußkabels (5) in die im Bolzenkopf (11) ausgebildete Bohrung (12) eingeführt ist und dabei einführseitig aus der Bohrungseintrittsöffnung (16) vorsteht, dadurch gekennzeichnet, daß die Verschweißung oder Verlötung zwischen dem Bolzenkopf (11) und der Metallhülse (14) erfolgt.

3. Vorrichtung nach Anspruch 1 oder 2, wobei die Bohrung (12) vollständig durch den Bolzenkopf (11) hindurchgeht und dabei die Stirnseite des abisolierten Kabelendes (13) des Anschlußkabels (5) sowie gegebenenfalls der Metallhülse (14) im wesentlichen bündig mit der Außenseite (15) des Bolzenkopfes (11) abschließt, dadurch gekennzeichnet, daß im stirnseitigen Übergangsbereich zwischen der Außenseite (15) des Bolzenkopfes (11) und der Stirnseite des abisolierten Kabelendes (13) des Anschlußkabels (5) gegebenenfalls zusammen mit der dazwischen angeordneten Stirnseite der Metallhülse (14) die Teile ringförmig miteinander verschweißt oder verlötet sind.

4. Vorrichtung nach Anspruch 3, dadurch gekennzeichnet, daß die Teile derart miteinander verschweißt oder verlötet sind, daß sie durch das Schweiß- oder Lötmittel kreisscheibenförmig abgedeckt und elektrisch miteinander verbunden sind.

5. Vorrichtung nach Anspruch 1 oder 2, dadurch gekennzeichnet, daß die Bohrung (12) als Sacklochbohrung ausgebildet ist.

6. Vorrichtung nach einem der Ansprüche 2 bis 5, dadurch gekennzeichnet, daß der aus der Bohrungseintrittsöffnung (16) einführseitig vorstehende Bereich der Metallhülse (14) mit dem abisolierten Kabelende (13) des Anschlußkabels (5) verpreßt ist.

7. Vorrichtung nach einem der Ansprüche 2 bis 6, dadurch gekennzeichnet, daß der aus der Bohrungseintrittsöffnung (16) einführseitig vorstehende Bereich der Metallhülse (14) und die Isolierung (18) des Anschlußkabels (5) von einem Schrumpfschlauch (17) dichtend umgeben sind.

8. Vorrichtung nach Anspruch 1, dadurch gekennzeichnet, daß der Bolzenkopf (11) zusammen mit dem abisolierten Kabelende (13) des Anschlußkabels (5) mit einer Kunststoffmasse umgossen ist.

9. Vorrichtung nach einem der Ansprüche 1 bis 8, dadurch gekennzeichnet, daß im Übergangsbereich zwischen dem Gewindeansatz (7) und dem konischen Bolzen (6) eine eine Sollbruchstelle definierende Querschnittsschwächung (8) vorgesehen ist.

10. Vorrichtung nach einem der Ansprüche 1 bis 8, dadurch gekennzeichnet, daß im Übergangsbereich zwischen dem Gewindeansatz (7) und dem konischen Bolzen (6) der Gewindeansatz (7) ein auf einen geringeren Querschnitt abgesenkten Ansatz aufweist, der in einer dazu korrespondierenden Ausnehmung im konischen Bolzen (6) eingreift und mit diesem durch eine ein Hartlot aufweisende, eine Sollbruchstelle definierende Lötfuge verbunden ist.

## Claims

1. Device for the electrical connection of a connecting cable (5) to a rail (1), which device is provided with a conical hole (3), by means of a conical bolt (6) which is inserted into the hole and is provided on its one end with a threaded attachment (7) for an attachment mount (10) and at its other end with a bolt head (11) with a hole (12) which is constructed therein and into which the stripped cable end (13) of the connecting cable (5) is inserted and electrically connected to the bolt head (11), the stripped cable end (13) of the connecting cable (5) being directly or indirectly welded or soldered to the bolt head (11), characterised in that the welding or soldering is constructed in an annular form in the edge region in which the stripped cable end (13) emerges from the bolt head (11) through the hole inlet opening (16).

2. Device according to Claim 1, the stripped cable end (13) of the connecting cable (5) being surrounded by a metal sleeve (14) which is inserted therein, and being electrically connected to said metal sleeve (14), said metal sleeve (14) being inserted together with the stripped cable end (13) of the connecting cable (5) into the hole (12) which is constructed in the bolt head (11), and at the same time projecting on the insertion side from the hole inlet opening (16), characterised in that the welding or soldering takes place between the bolt head (11) and the metal sleeve (14).

3. Device according to Claim 1 or 2, the hole (12) passing completely through the bolt head (11) and, in this case, the end of the stripped cable end (13) of the connecting cable (5) and, possibly, of the metal sleeve (14) terminating essentially flush with the outside (15) of the bolt head (11), characterised in that the parts are welded or soldered to one another in an annular form in the end transition region between the outside (15) of the bolt head (11) and the end of the stripped cable end (13) of the connecting cable (5), possibly together with the end of the metal sleeve (14) arranged between them.

4. Device according to Claim 3, characterised in that the parts are welded or soldered to one another in such a manner that they are covered and electrically connected to one another in the form of a circular disc by the welding or soldering means.

5. Device according to Claim 1 or 2, characterised in that the hole (12) is constructed as a blind hole.

6. Device according to one of Claims 2 to 5, characterised in that the region of the metal sleeve (14) projecting from the hole inlet opening (16) on the insertion side is crimped to the stripped cable end (13) of the connecting cable (5).

7. Device according to one of Claims 2 to 6, characterised in that the region of the metal sleeve (14) projecting from the hole inlet opening (16) on the insertion side, and the insulation (18) of the connecting cable (5), are surrounded by a shrink sleeve (17) in a sealing manner.

8. Device according to Claim 1, characterised in that the bolt head (11), together with the stripped cable end (13) of the connecting cable (5) has a plastic compound cast around it.

9. Device according to one of Claims 1 to 8, characterised in that a cross-sectional constriction (8), which defines a weak point, is provided in the transition region between the threaded attachment (7) and the conical bolt (6).

10. Device according to one of Claims 1 to 8, characterised in that the threaded attachment (7) has an attachment in the transition region between the threaded attachment (7) and the conical bolt (6), which attachment is reduced to a smaller cross-section, engages in a recess, corresponding thereto, in the conical bolt (6), and is connected thereto by means of a solder joint which has a silver solder and defines a weak point.

## Revendications

1. Dispositif destiné à connecter électriquement un câble de branchement (5) à un rail (1), qui est pourvu d'un perçage conique (3), au moyen d'un boulon conique (6) qui est introduit dans le perçage et qui comporte, à l'une de ses faces frontales, un embout fileté (7) destiné à un écrou de fixation (20) et, à son autre face frontale, une tête de boulon (11) dans laquelle est pratiqué un perçage (12) où l'extrémité dénudée (13) du câble de branchement (5) est introduite et connectée électriquement à la tête de boulon (11), l'extrémité dénudée (13) du câble de branchement (5) étant soudée ou brasée, indirectement ou directement, à la tête de boulon (11), caractérisé en ce que le soudage ou le brasage est réalisé sous forme annulaire dans la zone de bord où l'extrémité dénudée (13) du câble sort de la tête de boulon (11) par l'ouverture d'entrée (16) du perçage.

2. Dispositif selon la revendication 1, dans lequel l'extrémité dénudée (13) du câble de branchement (5) est entourée d'une douille métallique (14) et y est reliée électriquement, ladite douille métallique (14) étant logée avec l'extrémité dénudée (13) du câble de branchement (5) dans le perçage (12) pratiqué dans la tête de boulon (11) et dépassant, du côté introduction, de l'ouverture d'entrée (16) du perçage, caractérisé en ce que le soudage ou le brasage est réalisé entre la tête de boulon (11) et la douille métallique (14).

3. Dispositif selon la revendication 1 ou 2, dans lequel le perçage (12) traverse complètement la tête de boulon (11) et dans lequel la face frontale de l'extrémité dénudée (13) du câble de branchement (5) et, le cas échéant, celle de la douille métallique (14) se terminent sensiblement au ras de la face extérieure (15) de la tête de boulon (11), caractérisé en ce que, dans la zone de contact frontale située entre la face extérieure (15) de la tête de boulon (11) et la face frontale de l'extrémité dénudée (13) du câble de branchement (5), les pièces sont solidarisées par une soudure ou une brasure annulaire, le cas échéant conjointement avec la face frontale de la douille métallique (14) insérée entre elles.

4. Dispositif selon la revendication 3, caractérisé en ce que les pièces sont soudées ou brasées entre elles, de façon à être recouvertes par un disque de matière de soudage et de brasage et à être reliées électriquement entre elles.

5. Dispositif selon la revendication 1 ou 2, caractérisé en ce que le perçage (12) est conçu sous la forme d'un trou borgne.

6. Dispositif selon l'une des revendications 2 à 5, caractérisé en ce que la zone de la douille métallique (14) qui dépasse, côté introduction, de l'ouverture d'entrée (16) du perçage est sertie avec l'extrémité dénudée (13) du câble de branchement (5).

7. Dispositif selon l'une des revendications 2 à 6, caractérisé en ce que la zone de la douille métallique (14) qui dépasse, côté introduction, de l'ouverture d'entrée (16) du perçage, et l'isolant (18) du câble de branchement (5) sont entourés de manière étanche par une gaine rétractable (17).

8. Dispositif selon la revendication 1, caractérisé en ce que la tête de boulon (11) associée à l'extrémité dénudée (13) du câble de branchement (5) est enrobée d'une masse de matière plastique.

9. Dispositif selon l'une des revendications 1 à 8, caractérisé en ce qu'il est prévu, dans la zone de contact entre l'embout fileté (7) et le boulon conique (6), une réduction de section transversale (8) qui définit un point de rupture théorique.

10. Dispositif selon l'une des revendications 1 à 8, caractérisé en ce que, dans la zone de contact entre l'embout fileté (7) et le bouton conique (6), l'embout fileté (7) comporte un téton qui présente une section transversale plus réduite, qui s'engage dans un évidement correspondant du bouton conique (6) et qui y est relié par un joint brasé qui est obtenu par brasage fort et définit un point de rupture théorique.
